# EUROPEAN PATENT APPLICATION

(11) **EP 1 873 846 A1**
(43) Date of publication of application: **02.01.2008**
(21) Application number: 06712970.0
(22) Date of filing: 03.02.2006
(51) Int. Cl.: H01M 4/38, H01M 4/02, H01M 4/62

(54) **NEGATIVE ELECTRODE ACTIVE MATERIAL PARTICLE FOR LITHIUM SECONDARY BATTERY, NEGATIVE ELECTRODE AND METHODS FOR PRODUCING THOSE**

(30) Priority: 23.03.2005 JP 2005082997
(71) Applicant: Pionics Co., Ltd., Shiga, 5202101 (JP)
(72) Inventor: KAGAWA, Hiroshi, Osaka, 5690001 (JP); SADA, Tsutomu, Shiga, 5202101 (JP); HASHIMOTO, Kanae, Shiga, 5260125 (JP); MORIYAMA, Masakazu, Osaka, 5460043 (JP)
(74) Representative: Reitstötter - Kinzebach
(86) International application number: PCT/JP2006/301827
(87) International publication number: WO 2006/100837

(57) **Abstract**

Disclosed is a negative electrode active material particle forlithiumsecondary batteries which electrochemically adsorbs and discharges lithium. This negative electrode active material particle for lithium secondary batteries is **characterized by** including a first metal having a property of mainly adsorbing and discharging lithium, and a second metal having a property of stabilizing the shape change of the first metal at the time of adsorption or discharge of lithium, while mainly containing an alloy composition composed of the first metal and the second metal, such as CoSn₂. Also disclosed are a negative electrode using such a negative electrode active material particle, and methods for producing them.

## Description

### FIELD OF THE INVENTION

The present invention relates to a novel negative electrode active material particle having a high capacity for use in a lithium secondary battery, a negative electrode and methods for producing those, and more particularly relates to a negative electrode active material particle for use in a lithium secondary battery, which electrochemically adsorbs and discharges lithium and has the following features, a negative electrode using such a particle, and methods for producing those. The negative electrode active material particle, which contains a first metal having a property of adsorbing and discharging lithium, a second metal having a property of stabilizing the shape change upon adsorption and discharge of lithium and a third metal that hardly reacts with an electrolytic solution and also hardly adsorbs and discharges lithium, is characterized in that the third metal is deposited on, combined or fused with at least one portion of a particle interface and/or an outer surface of the negative electrode active material particle, or is prepared as a negative-electrode active material particle that contains tin having a property of adsorbing and discharging lithium and cobalt having a property of stabilizing the shape change upon adsorption and discharge of lithium, and has a composition mainly made from CoSn₂.

### BACKGROUND OF THE INVENTION

The lithium secondary battery is particularly used for portable apparatuses. With respect to batteries for use in recent portable apparatuses typically represented by mobile telephones and portable personal computers, with many functions attached thereto, there have been strong demands for increasing the battery capacity that gives influences to an output voltage in response to an operable voltage of the apparatus as well as to usable period of time. In particular, with respect to the increase of the battery capacity so as to prolong the usable period of time, since the battery space is limited, it is not possible to increase the battery capacity except for increasing the energy density of the active material used for accumulating electric energy.

A typical positive electrode active material for lithium secondary batteries that has been conventionally used is lithium cobaltate, and a negative electrode active material is graphite . However, it is difficult to obtain a capacity energy efficiency of 400 Wh/L or more by using such a battery material structure. In particular, since the theoretical energy quantity of graphite as a negative electrode active material is 372 mAh/g, there is a limitation in increasing the battery capacity, and developments of negative electrode active materials of the other kinds having a greater theoretical energy quantity have been carried out in various research organizations and battery manufacturers.

In JP-A No. 8-50992, JP-A No. 2001-332254, JP-A No. 2002-83594, JP-A No. 2003-77529, JP-A No. 2003-109589 and JP-A No. 2004-11202, materials such as silicon and tin have been listed as negative electrode active materials that can adsorb and discharge lithium in the same manner as in graphite, and these have explained that, when one of these metals is used alone, the volume is expanded upon adsorption (electrical charging) of lithium, while in contrast, the volume is contracted upon discharge (electrical discharging) of lithium.

Here, it has been pointed out that such volume expansion and contraction interrupt with electrical connection among the respective particles due to breakage of the crystal structure of metal or isolated particles caused by miniaturization of the particles, with the result that problems, such as a reduction in the utilization factor of the discharging capacity of the battery, tend to occur.

In order to solve these problems, improvements have been made in which by adding another metal to the negative electrode active material to form an alloy or an amorphous material, the rate of change in the metal volume is reduced or the miniaturization of particles is restrained, or by allowing the metal to contain a conductive material to maintain the conductivity among the respective particles,or by allowing metal, which adsorbs and discharges lithium, to grow directly on the surface of a collector, which even upon occurrence of a volume expansion, prevents the electrical connection between the collector and the negative electrode active material from being interrupted, is achieved.

However, even such an improved negative electrode active material fails to provide a sufficient reduction-restraining effect for a battery capacity with respect to charging and discharging cycles, such as the effect provided by conventional graphite, and causes problems to be solved in cycle performance in the battery and improvements in the capacity, such as degradation in discharging performance due to minute damages in alloy particles and inactive coat-film formation on the alloy particle surface, and failure in increasing the battery capacity per unit area sufficiently due to formation of an active material metal by the use of a sputtering method or the like.

### DISCLOSURE OF THE INVENTION

Even in the case when the surface of a negative electrode collector is surface-treated by using such a conventional improved negative electrode active material made of a silicon alloy or a tin alloy so that a coat layer is formed, the rate of volume expansion/contraction due to adsorption and discharge of lithium is still high and particles tend to be miniaturized, with the result that the electrical connection among the particles is interrupted to cause degradation in the charging and discharging cycles as well as in the discharging performance.

The present invention has been devised to solve the above-mentioned problems, and its main object is (1) to restrain the miniaturization of the particle due to adsorption and discharge of lithium in a negative electrode active material particle, (2) to provide a negative electrode active particle for lithium secondary batteries, which even upon occurrence of the miniaturization of the particle due to adsorption and discharge of lithium in a negative electrode active material particle, can maintain the electrical connection among the miniaturized fine particles, and a negative electrode using such negative electrode active material particles, as well as methods for producing those. Here, in this case, the shapes of the negative electrode active material particle include various shapes, such as a particle shape, a short fiber shape and a flake shape.

Another object of the present invention is (3) to provide a negative electrode active material particle for lithium secondary batteries, which can reduce the change in volume at the time of adsorption and discharge of lithium, and a negative electrode using such negative electrode active material particles, as well as methods for producing those.

Still another object of the present invention is (4) to provide a negative electrode active material particle for lithium secondary batteries, which has a high charging and discharging efficiency, hardly causes a reduction in cycle service life and energy density even by the charging and discharging, and is free from an increase in the inner resistance, and a negative electrode using such negative electrode active material particles, as well as methods for producing those. The other object of the present invention is (5) to provide a negative electrode using a conductive substance in which a specific metal substance, such as nickel and copper, is mixed so that the improvement of voltage and the improvement of electron mobility are accelerated, and a method for producing such an electrode.

The negative electrode active material particle and the method for producing such particle in accordance with the present invention is characterized by the steps of: mainly using one kind or two or more kinds of metals selected from the group consisting of silicon, tin and aluminum, with a metal having a property of stabilizing the shape change of silicon, tin or aluminum at the time of adsorption and discharge of lithium, or a metal that hardly reacts with an electrolytic solution and also hardly adsorbs and discharges lithium, if necessary, being contained therein, and allowing the metal that hardly reacts with the electrolytic solution and also hardly adsorbs and discharges lithium to be deposited on, combined or fused with at least one portion of a particle interface and/or an outer surface of the negative electrode active material particle.

In other words, the present invention relates to a negative electrode active material particle for lithium secondary batteries that electrochemically adsorbs and discharges lithium, and provides the negative electrode active material particle for lithium secondary batteries, which contains a first metal mainly composed of one kind or two or more kinds of metals selected from the group consisting of silicon, tin and aluminum, having a property of adsorbing and discharging lithium, a second metal having a property of stabilizing the shape change upon adsorption and discharge of lithium and a third metal that hardly reacts with an electrolytic solution and also hardly adsorbs and discharges lithium, and the thirdmetal is deposited on, combined or fused with at least one portion of a particle interface and/or an outer surface of the negative electrode active material particle, or is prepared as a negative-electrode active material particle that contains tin having a property of adsorbing and discharging lithium and cobalt having a property of stabilizing the shape change upon adsorption and discharge of lithium, and has a composition mainly made from CoSn₂, as well as methods for producing such a particle.

Therefore, the structure of a negative electrode active material particle of the present invention is completely different from that of the conventional negative electrode active material particle, and one of its features is that a third metal, which hardly reacts with an electrolytic solution and also hardly adsorbs and discharges lithium, is deposited on, combined or fused with at least one portion of a particle interface and/or an outer surface of the negative electrode active material particle mainly composed of one kind or two or more kinds of metals selected from the group consisting of silicon, tin and aluminum, so that the negative electrode active material particle is consequently allowed to restrain the miniaturization of the particle because the alloyed third metal does not contribute to adsorb and discharge lithium, and the electrical connection among the particles can be maintained.

Moreover, in the case when this negative electrode active material particle is finelypulverized, it is easilyminiaturized into individual particles on the particle interface which the third metal has been deposited on, combined or fused with, and even in the case when the negative electrode active material particle is miniaturized, since the third metal is exposed to one portion of the surface of each of the individual miniaturized particles, the corresponding third metal prevents an inactive reaction product film caused by a reaction with an electrolytic solution from being formed on the surface of the negative electrode active material particle so that the electrical connection among the particles can be maintained.

Examples of the third metal having a property of hardly reacting with the electrolytic solution and also hardly absorbing and discharging lithium include: one kind or two or more kinds of metals selected from the group consisting of molybdenum, tungsten, tantalum, thallium, chromium, tellurium, beryllium, calcium, nickel, silver, copper and iron, or an alloy of these, and among these, even metals, which are hardly alloyed with the negative electrode active material, such as molybdenum, tungsten, tantalum, thallium, chromium, tellurium, beryllium and calcium, may be used.

In contrast, metals, such as nickel, silver, copper and iron, which are easily alloyed with a negative electrode active material such as silicon, are suitably used as the third metal because these metals improve voltage and assist electron mobility so that the high-rate property is improved, and consequently accelerate the efficiency of REDOX reaction so that the generation of reaction heat is restrained.

Moreover, when 1 wt% or more, preferably, 5 wt% or more of the third metal is contained in the entire negative electrode active material particle, its deposition effect is exerted more highly. Here, it is only necessary for the deposited third metal to be deposited on, combined or fused with at least one portion of a particle interface and/or an outer surface of the negative electrode active material particle, and it is not necessary to be deposited on, combined or fused therewith in a manner so as to cover all the organization of the negative electrode active material particle divided by particle interfaces or the like.

Furthermore, in order to allow the third metal to be easily deposited on, combined or fused with the particle interface and/or the outer surface of the negative electrode active material particle, it is effective to allow the first metal, made of one kind or two or more kinds of metals selected from the group consisting of silicon, tin and aluminum, to preliminarily contain one kind or two or more kinds of metals selected from the group consisting of iron, aluminum, chromium, magnesium, manganese, antimony, lead, zinc and silicon, and to be alloyed, and in particular, with respect to silicon or the like, when these metals are added thereto at a rate of 1 wt% or less, the resulting effect becomes greater. Here, such alloy particles are commercially available.

In the negative electrode active material particle of the present invention that is formed on the premise that the particle is subjected to a certain degree of miniaturization due to a volume change caused by the adsorption and discharge of lithium, however, since restraining of the miniaturization of the negative electrode active material particle itself mainly composed of one kind or two kinds or more of metals selected from the group consisting of silicon, tin and aluminum also makes it possible to devote prevention of a reduction in the battery capacity due to the charging and discharging cycle or the like, in addition of the first metal such as silicon, one kind or two kinds or more of second metals selected from the group consisting of iron, cobalt, copper, nickel, chromium, magnesium, lead, tin, zinc, silver, germanium, manganese, titanium, vanadium, bismuth, indium and antimony, may be added thereto so as to stabilize the shape change in the negative electrode active material particle.

The alloying process between the second and third metals and the first metal that mainly exerts adsorbing and discharging functions of lithium may be carried out through processes in which, after the second metal and the third metal have been preliminarily alloyed with each other, the resulting alloy may be alloyed with the first metal, or the second and third metals may be simultaneously alloyed with the first metal.

The above-mentioned alloying means between the first metal that mainly exerts adsorbing and discharging functions of lithium and the second and third metals allows the third metal, which has a property of hardly reacting with the electrolytic solution and also hardly absorbing and discharging lithium, to be more positively deposited on, combined or fused with the particle interface and/or the outer surface of the negative electrode active material particle, in comparison with the means in which after the first metal has been simply alloyed with either one of the second and third metals, the resulting alloy metal is alloyed with the other of the third and the second metals.

In order to allow the third metal to be deposited on, combined or fused with the particle interface and/or the outer surface of the negative electrode active material, the alloying process of the first, second and third metals is preferably carried out in an inert gas sealed atmosphere, by using at least one method selected from the group consisting of a mechanical alloying method, a mechanical gliding method, a fusing method, a gas-atomizing method, a water-atomizing method, a mechanofusion method, a hybridizing method, a plating method, a sputtering method, a vapor deposition method, a vapor phase method, a liquid-quickly-cooling method and a gas-quickly-cooling method, and in order to strengthen the combined state of the deposited, combined or fused third metal, after the alloying process of the first, second and third metals, a heating treatment is preferably carried out in an inert gas atmosphere or under vacuum, at a temperature of 100°C or more.

Moreover, the third metal may be subjected to a surface treatment (including deposition, anchoring, coating or coordination) so as to form a matrix network on the surface of the negative electrode active material particle by using a micro-wave or plasma irradiation under an atmosphere including an aromatic-based solvent (BTX) ; thus, it is possible to improve the surface conductivity. Here, upon application to a negative electrode, mixed powder of negative electrode active material particles, produced by using these different methods, may be used.

Moreover, with respect to the method for forming the alloyed metal into fine particles, a solid-state metal particle once produced may be pulverized into fine particles by using a jet-mill method or a gliding method; however, in the case when alloy fine particles are manufactured from an alloy in a fused state by using the gas-atomizing method or water-atomizing method, since alloy particles, made from the first, second and third metals formed into fine particles, are directly obtained, the pulverizing process may be omitted in this case.

As described above, by allowing the third metal to be deposited on, combined or fused with the surface, the inside and the particle interface of the negative electrode active material particle, the negative electrode coat layer to which this negative electrode active material particle has been applied is allowed to have an electron-conductive network formed therein, which, even upon occurrence of an electrochemical reaction by the third metal combined with the individual negative electrode active material particle, is less vulnerable to the resulting influences.

Moreover, in order to improve the resistance to expansion/contraction of the negative electrode active material particle by the stabilized shape and consequently to restrain the miniaturization of the particle, it is preferable to contain the third metal having a property of hardly reacting with an electrolytic solution and also hardly adsorbing and discharging lithium and the second metal having a property of stabilizing the shape change of the first metal, at a rate of 5 wt% or more in the total amount in the entire negative electrode active material particles.

Moreover, the third metal is preferably contained at a rate of at least 1 wt% or more, preferably, 5 wt% or more, based on the entire negative electrode active material particles, and in the case when it is not contained at a rate of 1 wt% or more, the third metal might not be sufficiently deposited on, combined or fused with the particle interface and/or the outer surface of the negative electrode active material particle.

Another characteristic of the present invention is to provide a negative electrode active material particle that contains tin in a range from about 75 wt% to about 90 wt%, as the first metal having a property of adsorbing and discharging lithium, and cobalt in a range from about 10 to about 25 wt% as the second metal having a property of stabilizing the shape change at the time of adsorption and discharge of lithium, and the particle is prepared as alloy particles having a composition mainly made from CoSn₂ crystal; thus, it is possible to restrain the pulverization into fine powder at the time of adsorption and discharge of lithium.

However, in the case when such a composition is not available or the above-mentioned weight ratio is not achieved, tin, cobalt and the other added metals tend to be in a free state, or the composition between tin and cobalt becomes different to generate a composition corresponding to Co₂Sn₃, allowing the miniaturization of the particle to progress easily.

Here, even in the case when the other second and/or third metal elements are added, when the content ratio of tin and cobalt is maintained at about 80 wt% of tin to about 20 wt% of cobalt, an alloy mainly composed of CoSn₂ crystal (cubic crystal) is formed, and the homogeneity of the alloy composition is consequently improved so that it is possible to restrain the miniaturization and isolation of the particle due to adsorption and discharge of lithium at the time of charging or discharging, and consequently to improve the cycle property as the negative electrode active material particle.

Moreover, it has been confirmed through the SEM observation on the electrode surface after charging and discharging tests that by allowing the alloy of the negative electrode active material particle to contain 5% or less of boron, phosphorous or the like, it becomes possible to reduce coming off of the particles from the electrode surface due to miniaturization upon adsorption or discharge of lithium, and consequently to increase the mechanical strength of the alloy particle and restrain the miniaturization of the particle. On the contrary, however, the fine-particle-forming phenomenon can be occasionally restrained by weakening the mechanical strength of the alloy particle.

Moreover, on the outer surface of the negative electrode active material particle of the present invention, one kind or two or more kinds of conductive materials selected from the group consisting of a conductive metal, a metal carbide and carbon are preferably anchored, coated and/or coordinated.

Even in the case when the negative electrode active material particle is changed in its volume by adsorption and discharge of lithium to cause miniaturization of the particle, each of these conductive materials functions so as to maintain the electrical network among the respective particles as well as between the particles and the negative electrode collector in cooperation with the thirdmetal that is deposited on, combined or fused with the particle interface and/or the outer surface of the particle, so that a lithium secondary battery which uses the negative electrode active material of the present invention hardly reduces the discharging performance due to the charging and discharging cycle of the battery.

With respect to effective conductive materials used for achieving the above-mentioned functions, for example, metals having a property of hardly reacting with an electrolytic solution and of hardly adsorbing lithium electrochemically are preferably used as the conductive metal, and specific examples thereof include one kind or two kinds or more of metals selected from the group consisting of nickel, iron, copper, chromium, niobium, silver, tantalum, vanadium, molybdenum, tungsten and titanium, or an alloy of these metals.

Moreover, upon anchoring, coating and/or coordinating these conductive metals onto the surface of the negative electrode active material particle, at least one method, selected from the group consisting of a mechanofusion method, a hybridizing method, a plating method, a sputtering method, a vapor deposition method, a flame coating method, a spraying method, a coating method, an immersing method, an electrostatic method, a firing method, a sintering method, a sol-gel method, a vapor phase method, a planetary ball-mill method, a microwave method and a plasma irradiation method, is preferably used.

More preferably, after each of these conductive metals has been anchored, coated and/or coordinated onto the surface of the negative electrode active material particle by using the above-mentioned producing method, this may be subjected to a heating treatment at a temperature of 100°C or more in an inert gas atmosphere or under vacuum so that a mutual diffusion layer maybe formed on the contact interface with the negative electrode active material particle.

In this case, in comparison with the aforementioned anchoring, coating and/or coordinating method, the conductive metal and the negative electrode active material particle can be further firmly combined with each other; therefore, even upon occurrence of a volume change in the negative electrode active material particle due to adsorption and discharge of lithium, it becomes possible to prevent the conductive metal from coming off from the surface of the negative electrode active material particle. Moreover, the same effects as described above can be obtained by forming a matrix network on the surface of the negative electrode active material particle by using a microwave or plasma irradiation under an aromatic solvent atmosphere by the use of a vapor phase method.

Moreover, when any one of compounds including zirconium oxide, titanium oxide, lithium titanate, sulfide, phosphite and nitride is combined with at least one portion of the surface of the negative electrode active material particle, it becomes possible to restrain the decomposition of an electrolytic solution due to charging and discharging, and consequently to restrain an increase in the interface resistance of the electrode.

For example, in the case when the negative electrode active material particle and a small amount of a zirconium oxide solution are mixed, and after kneading this by using a planetary mill, a planetary ball-mill, a vibration mill or the like so that the surface of the negative electrode active material particle is thinly coated with the solution, and this is subjected to a heating treatment in a furnace in an inert gas atmosphere at a temperature of several hundreds °C, so that the zirconium oxide is sintered on the surface of the negative electrode active material particle. Moreover, in the case when lithium titanate is combined with the surface of the negative electrode active material particle by using a coating and combining method such as a mechanofusion method, the resulting material is allowed to function as the surface-modifying material and also as the negative electrode active material.

In the case when negative electrode active material particles made of a metal alloy are mixed with carbon having a property of adsorbing and discharging lithium at a weight ratio of 30 wt% or more based on the total weight of the mixture thereof, it becomes possible to restrain the decomposition of an electrolytic solution due to charging and discharging processes, and even upon occurrence of miniaturization of the alloy particles due to charging and discharging processes, it is also possible to allow the carbon to function as a conductive material to restrain an electrical path from being interrupted by the isolation.

With respect to the carbide that exerts the same function as that of the conductive metal, one kind or two kinds or more of carbides selected from the group consisting of CoC, CrC, FeC, MoC, WC, TiC, TaC and ZrC are listed. In this case also, the carbide is subjected to the same production method and heating treatment as those of the conductive metal, so that the combination as the carbide is generated on the surface of the negative electrode active material particle, and the firm combination is exerted in the same manner as in the conductive metal to prevent coming off of the particle, even upon a volume change in the particle.

Moreover, with respect to the carbon that exerts the same function, one kind or two kinds or more of carbons selected from the group consisting of low-temperature fired carbon, amorphous carbon, Ketchen Black, Acetylene Black, fiber-state carbon, nanotube, nanohorn and graphite are listed.

Each of these carbons may be joined, anchored or coated on the surface of the negative electrode active material particle by applying a pressing force or an impact force through a mechanofusion method, a hybridizing method or the like, or an organic compound is alone fired or an organic compound to which the carbon has been added is fired, so that the carbon may be anchored, coated and/or coordinated onto the surface of the negative electrode active material particle; alternatively, the carbon may be anchored, coated and/or coordinated onto the surface of the negative electrode active material particle by using a binder. For example, in the case when the carbon is anchored, coated and/or coordinated onto the surface of the negative electrode active material particle by using a binder, the negative electrode active material particles and various kinds of carbons are added to a binder such as PVdF, and this is kneaded, and applied and coated onto the surface of a negative electrode collector, so that the various kinds of carbons are combined with the surface of the negative electrode active material particle through the binder.

More specifically, the anchoring, coating and/or coordinating process of carbon onto the surface of the negative electrode active material particle is carried out through processes in which, for example, an organic polymer material, such as phenol resin, sugar and pitch, is alone, or in a mixed state with a conductive material such as carbon, to be coated on the surface of the negative electrode active material particle, and this is subjected to a heating treatment at a temperature in a range from about 300°C to about 1200°C in a reducing atmosphere so that a low-temperature fired carbon coat film having a thickness of 1µm or less is formed on one portion of the surface of the negative electrode active material particle in a manner so as to form a matrix network, or the carbon coat film is allowed to contain another conductive material so that a coat film in which the conductivity of the negative electrode active material particle is further improved can be formed.

As a result, even in the case when the negative electrode active material particle is miniaturized by adsorption and discharge of lithium, since the carbon coat film is firmly formed on at least one portion of the surface of the negative electrode active material particle, it becomes possible to prevent the above-mentioned electrical network from being damaged as the charging and discharging cycles of the battery proceed, and consequently to maintain a high discharging performance of the battery.

That is, the negative electrode active material particle of the present invention is characterized by the fact that even when the miniaturization of the particle progresses due to a volume change caused by adsorption and discharge of lithium, the electrical network among the respective particles as well as between the particles and the negative electrode collector can be maintained.

Next, the negative electrode active material particle of the present invention is applied to a negative electrode collector to form a negative electrode for lithium secondary batteries.

In order to form the negative electrode of the present invention, a conductive assistant such as Acetylene Black, Ketchen Black, nanotube, and nanohorn, and a binder such as PVdF and SBR, or a dispersant such as CMC are added to the above-mentioned negative electrode active material particle, and this is kneaded to prepare a negative electrode mixed agent, and this negative electrode mixed agent is applied to the surface and rear surface of a negative electrode collector made of electrolytic copper foil or rolled copper foil, having a thickness from 8µm to 15µm, and this is then dried in a coating line.

The negative electrode thus dried is then subjected to a pressing process so that the surface of the negative electrode is smoothed. At this time, in the case when the negative electrode active material particles of the present invention are used, it is only necessary to carry out a light pressing process in a minimum level required for smoothing the surface of the negative electrode, and it is not necessary to carry out a heavy pressing process on the negative electrode to increase the electrode density as in the case of using the conventional negative electrode active material particle.

The reason that a light pressing process is applied to the negative electrode according to the present invention is because the negative electrode of the present invention is not intended to increase the electrode density as a major object, but intended to form a porous layer or a matrix network (two-dimensional or three-dimensional network structure, etc.) by coating the surface of the negative electrode active material particle with a conductive material as its object.

Moreover, by allowing the gaps among the negative electrode active material particles to contain the above-mentioned fine conductive assistant such as Ketchen Black, Acetylene Black, nanotube and nanohorn, at a rate of 1 wt% to 15 wt%, many minute spaces are distributed on the periphery of each negative electrode active material particle in the negative electrode, so that such minute spaces are made to absorb a volume increase generated at the time of adsorption of lithium by the negative electrode active material particle, which is a main object of the present invention.

That is, the negative electrode in accordance with the present invention allows the minute spaces present inside the negative electrode to absorb a volume change of the negative electrode active material particle so that the change in the electrode thickness as a whole is restrained. As a result, a lithium secondary battery using the negative electrode of the present invention hardly has hardly volume change in its shape (in particular, in thickness) due to charging and discharging processes, and even when the battery is housed in a limited space, no change occurs in the thickness and the like of the battery, so that no adverse effects are given to the apparatus.

With respect to the negative electrode formed in this manner, the void rate, found by measuring the density and weight of the negative electrode active material particle and the volume of the coat layer formed by actually applied negative electrode active material particles, is varied by changing the pressing pressure so that negative electrodes having respective void rates as shown in Table 1 are manufactured. Next, after each of these negative electrodes has been made to adsorb lithium, it is then made to release lithium, so that the rate of change in the negative electrode thickness is found from the respective thicknesses of the negative electrode before and after the tests.

**[Table 1]**

| Void rate | 28 | 30 | 35 | 40 | 50 | 60 | 65 | 70 | 75 |
|---|---|---|---|---|---|---|---|---|---|
| Rate of change in thickness | 150% | 35% | 4% | 1% | 0% | 0% | 1% | 4% | 5% |

The results shown in Table 1 indicate that when the void rate of the negative electrode coat layer becomes smaller than 30%, the thickness of the negative electrode is greatly varied to go out of the standard, following an increase in the negative electrode volume due to adsorption of lithium at the time of charging, and the electrolytic solution is made to hardly permeate into the negative electrode to cause a long period of time required for vacuum impregnation, or an insufficient amount of impregnation to deteriorate the battery performance. In contrast, when the void rate of the negative electrode coat layer becomes greater than 70%, it becomes impossible to place a predetermined amount of the negative electrode active material particles within the limited volume to cause a failure in obtaining a desired battery capacity.

Consequently, the void rate of the coat layer of the negative electrode in accordance with the present invention is preferably set in a range from 30% or more to 70% or less, more preferably, in a range from 40% or more to 65% or less. However, in the case when a discharging process is carried out after a charging process, since lithium accounting for about 5% in volume remains in the voids in the negative electrode coat layer, the void rate of the negative electrode coat layer of a lithium secondary battery in a state to be shipped after having been assembled and subjected to an aging process is preferably set in a range of 35% to 60%, obtained by subtracting the above-mentioned volume of residual lithium.

Therefore, in order to form a coat layer having such an appropriate void rate onto the negative electrode, it is important to provide appropriate voids near the outer surface of the particle by utilizing a coating material to be anchored, coated and/or coordinated onto the outer surface of the negative electrode active material particle to be applied, and not to carry out a high-pressure molding process on the negative electrode by using a roll press or the like to increase the electrode density, that is, it is important to provide processes in which, upon assembling the negative electrode in a lithium secondary battery, by carrying out a low-pressure molding process (for example, about 5 kg/cm to about 250 kg/cm in linear pressure) so as to maintain the smoothness of the negative electrode surface to such a degree as not to allow the negative electrode to push and break the separator, electrical connection is formed among the particles as well as between the particles and the negative electrode collector.

Moreover, after the discharging rate of lithium has been optimized by preliminarily allowing the negative electrode to adsorb and discharge lithium, the electrode surface of the negative electrode is processed in a pressed state while lithium is being adsorbed; thus, it is possible to obtain the negative electrode whose negative electrode thickness has already been changed. As a result, when this negative electrode is combined with the positive electrode, with further sufficient measures to moisture absorption and the like, it is possible to manufacture a lithium secondary battery in which the change in thickness of the battery due to charging and discharging is greatly reduced.

In another aspect of the present invention, in order to further improve the above-mentioned effects, by using a negative electrode active material particle that has preliminarily adsorbed lithium, the structure inside the particle is effectively changed to have a particle structure like that after having subjected to a charging or discharging process, that is, an indefinite-shapedparticle having a distorted shape as a whole, like virtually the shape of pumice with continuous and/or discontinuous fine pores, a particle having a sponge-shaped network organization with infinite fine pores, voids and cracks being located on the surface and inside thereof, or a coagulated (aggregated) particle having a shape in which these fine particles are aggregated and combined with one another.

As a result, in the case when the electrode is produced by using the above-mentioned negative electrode active material particle, since the volume expansion, which takes place upon adsorbing lithium, has been preliminarily exerted, a shape recovering effect like a shape memory alloy can be achieved even after charging and discharging processes have been repeated so that the volume change is suppressed to a minimum level and the increase in the negative electrode thickness can be restrained.

Moreover, by preliminarily injecting the negative electrode active material into the pores of the particle, the skeleton of the negative electrode active material particle restrains the volume expansion upon adsorption and discharge of lithium, and fine pulverization, and the corresponding skeleton is also used as electron conductive paths. Furthermore, by using a heavy pressing process instead of the light pressing process, the density of the electrode is increased so that the contact among the particles can be improved. Here, the separator and the electrolyte to be adopted at this time may be used without specific limitations in the material and structure thereof.

Table 2 shows the results of tests that were carried out to examine what influences the difference in the average particle size of the negative electrode active material particle of the present invention would give to the battery capacity maintaining rate (%) after a lapse of 30 cycles, that is, a value indicating how much the battery capacity after a lapse of 30 cycles is still maintained relative to the initial battery capacity.

Here, the average particle size used in this case is obtained through processes in which particles to be measured are sieved successively through standard sieves with standardized meshes in the order of larger mesh diameters so that the average particle diameter of particles remaining on each of the meshes is indicated by the mesh diameter of the sieve through which the particles have passed lastly. However, if the average particle size is small, a gas-flow classifier will be more effectively used in some cases.

**[Table 2]**

| Average particle size (µm) | ~1 | ~3 | ~6 | ~20 | 30~ |
|---|---|---|---|---|---|
| Battery capacity maintaining rate (%) after a lapse of 30 cycles | 100 | 98 | 97 | 95 | 74 |

Table 2 indicates that when the average particle size of the negative electrode active material particles becomes greater than 30µm, the volume change at the time of adsorption and discharge of lithium becomes too large to fail to absorb distortion caused inside the particle, resulting in miniaturization of the particle, and it is confirmed that the battery capacity maintaining rate (%) after a lapse of 30 cycles is consequently reduced greatly. Therefore, in order to maintain or improve the effect of the present invention, the average particle size of the negative electrode active material particles is preferably set to 20µm or less, more preferably, to 5µm or less.

In particular, in the case when the negative electrode active material particles having an average particle size of 2µm or less, with particles that cover 90% or more of the particle size distribution being set in a range from 0.01µm to 10µm, are used, it is possible to achieve 100% of the battery capacity maintaining rate after a lapse of 30 cycles even in the case of an average particle size of 2µm.

Moreover, in the case when the above-mentioned negative electrode active material particles are mixed with a carbon material serving as a negative electrode active material such as MCMB at a weight ratio of 30 wt% or more, preferably, 50 wt% or more, to form a mixture, and this is then mixed with a conductive material such as Acetylene Black, the dispersingpropertybetween these particle material and a binder is improved so that a strong joining property, which can prevent the particle material from coming off from the electrode even after repeating charging and discharging processes, and maintain an electron conductivity semi-permanently, is obtained. In the case when the mixture rate is 30 wt% or less, the improvement of the battery performance derived from the increase of the negative electrode active material particle of the present invention, for example, the improvement in the capacity energy efficiency, is very small, with the result that the industrial value thereof is lowered.

Moreover, it has been found that, in order to further improve the effects of the present invention, by mixing powder particles having a plurality of particle size distributions therewith, the stress distortion inside the particle occurring upon adsorption and discharge of lithium can be effectively absorbed by voids formed among the respective particles.

More specifically, by adding, for example, negative electrode active material particles having an average particle size ranging from 15µm to 20µm to negative electrode active material particles having an average particle size of 5µm at a weight ratio of about 10 wt%, concave and convex portions can be positively formed on the surface of the negative electrode. Then, this negative electrode surface is lightly pressed by using a roll press with a controlled gap so that only the negative electrode active material particles mainly forming the convex portions on the surface of the negative electrode are deformed into a flattened shape extended laterally; thus, it is possible to form a negative electrode having a smoothed surface as a whole.

In the negative electrode of this type, upon adsorption of lithium, its negative electrode active material particles that have been deformed laterally into the flattened shape are expanded mainly in lateral directions, while the other negative electrode active particles are expanded in a manner so as to extensively bury the concave portions formed between the respective particles, each deformed into a flattened shape; thus, it becomes possible to absorb the expanded portion of the volume, without hardly causing any change in the thickness of the negative electrode as a whole.

With respect to the shape of the negative electrode active material particle of the present invention, it has been found that since an elongated shape such as a flake shape, a flattened shape and a fiber shape is less vulnerable to progress of miniaturization of the particle in comparison with a spherical shape, with the result that the conductive portion of the protruding portion or the fiber-state portion of each particle is mutually made in contact with the adjacent particles or made entangled therewith in the negative electrode to easily form electrical connection among the particles. Moreover, it is found that, in particular, in the case of a spherical shape in the shape of the negative electrode active material particle, those particles having a smaller average particle size of several µms or less would adsorb lithium further inside thereof, making it possible to reduce the volume distortion as a whole, and consequently to improve the utilization factor, as well as making the particle hardly pulverized finely.

These negative electrode active material particle and negative electrode of the present invention are produced by methods explained below.

The negative electrode active material particle of the present invention is produced by using a method for manufacturing a negative electrode active material particle for use in a lithium secondary battery, which electrochemically adsorbs and discharges lithium, that is, a manufacturing method including the first step of preparing a first metal having a property of adsorbing and discharging lithium, a second metal having a property of stabilizing the shape change of the first metal and a third metal that hardly reacts with an electrolytic solution and also hardly adsorbs and discharges lithium; the second step of allowing the second metal and the third metal to be alloyed with the first metal so that a negative electrode active material particle in which the third metal is deposited on, combined or fused with at least one portion of a particle interface and/or an outer surface of the negative electrode active material particle is formed; and the third step of allowing one kind or two kinds or more of conductive materials selected from the group consisting of a conductive metal, a metal carbide and carbon to be anchored, coated and/or coordinated onto the negative electrode active material particle.

Here, the alloyingprocess in the second step maybe carried out by processes in which after the second and third metals have been preliminarily alloyed with each other, the first metal is alloyed with this, or the first, second and third metals may be simultaneously alloyed with one another.

Moreover, in order to produce the negative electrode of the present invention, in addition to the above-mentioned method for forming the negative electrode active material particle, the method for forming a negative electrode of the present invention further includes a step of preparing a coating material containing the negative electrode active material particle, other conductive material and binder, and a step of subjecting the coating material to a surface treatment on a negative electrode collector to form a negative electrode.

The first step is a step of preparing a first metal that is a negative electrode active material having a property of adsorbing and discharging lithium, a second metal having a property of stabilizing the shape change of the first metal and a third metal that hardly reacts with an electrolytic solution and also hardly adsorbs and discharges lithium.

Examples of the first metal mainly include one kind or two or more kinds of metals selected from the group consisting of silicon, tin and aluminum. In the present step, an alloy preliminarily formed by adding the first metal to one kind or two of more kinds of metals selected from the group consisting of iron, chromium, magnesium, manganese, antimony, lead and zinc may be used.

The second metal is a metal that is added so as to restrain miniaturization of the negative electrode active material particle itself due to a volume change following adsorption and discharge of lithium and stabilize the shape change of the negative electrode active material particle, for the purpose of preventing a reduction in the battery capacity due to charging and discharging cycles, and preferably, one kind or two or more kinds of metals selected from the group consisting of iron, cobalt, copper, nickel, chromium, magnesium, lead, zinc, silver, germanium, manganese, titanium, vanadium, bismuth, indium and antimony, may be used as the second metal.

Moreover, the third metal is a metal that has a property of hardly reacting with an electrolytic solution and of hardly adsorbing and discharging lithium, and preferably, one kind or two or more kinds of metals selected from the group of consisting of molybdenum, tungsten, tantalum, thallium, chromium, tellurium, beryllium, calcium, nickel, silver, copper and iron, or an alloy of these may be used, and among these, even metals, which are hardly alloyed with the negative electrode active material, such as molybdenum, tungsten, tantalum, thallium, chromium, tellurium, beryllium and calcium, may be used.

In contrast, even metals such as nickel, silver, copper and iron, which are easily alloyed with a negative electrode active material such as silicon, are suitably used as the third metal because these metals improve voltage and assist electron mobility so that the high-rate property is improved, and consequently accelerate the efficiency of REDOX reaction to restrain the generation of reaction heat.

The second step is a step of allowing the first, second and third metals to be alloyed with one another so as to allow the third metal to be deposited on, combined or fused with the particle interface and/or the outer surface of the negative electrode active material particle.

In order to improve the depositing effect of the third metal, the depositing, combining or fusing processes by the metals formed into an alloy of the present step are preferably carried out under an inert gas sealed atmosphere, by using one method selected from the group consisting of a mechanical alloying method, a mechanical gliding method, a fusing method, a gas-atomizing method, a water-atomizing method, a mechanofusion method, a hybridizing method, a plating method, a sputtering method, a vapor deposition method, a vapor phase method, a liquid-quick-cooling method and a gas-quickly-cooling method, and in order to strengthen the combined state of the deposited, combined or fused third metal, after the alloying process of the first, second and thirdmetals, a heating treatment is preferably carried out under an inert gas atmosphere or under vacuum, at a temperature of 100°C or more, more preferably, in a range from 500°C to 950°C.

Moreover, the third metal may be subjected to a surface treatment (including deposition, anchoring, coating or coordination) so as to form a matrix network on the surface of the negative electrode active material particle through a micro-wave or plasma irradiation under an atmosphere including an aromatic-based solvent (BTX) by using a vapor phase method; thus, it is possible to improve the surface conductivity. Here, upon application to a negative electrode, mixed powder of negative electrode active material particles, produced by using these different methods, may be used.

Moreover, with respect to these alloy particles, those particles that are directly formed into alloy particles having an average particle size of 20µm or less by using the above-mentioned method such as the gas-atomizing method and the water-atomizing method may be used; alternatively, those particles, which are alloyed by using the jet-mill method, gliding method and the like in combination, are pulverized and classified so as to have an average particle size of 20µm, and may be used.

In comparison with the alloying processes of the first, second and third metals simply by the use of a normal alloying method, when the negative electrode active material particle is produced by combining the above-mentioned steps and manufacturing methods so as to alloy the first, second and third metals with one another, the third metal is more effectively deposited on, combined or fused with the particle interface and/or the outer surface of the negative electrode active material particle, and the negative electrode active substrate particle, which has been alloyed, is simultaneously allowed to partially have an amorphous portion and a complicated shape so that it becomes possible to obtain a negative electrode active material having a superior charging and discharging cycle property with a high-energy capacity.

For example, the following description will discuss a manufacturing method in which tin is selected as the negative electrode active material, and its characteristics, as a preferable specific example of the negative electrode active material particle of the present invention.

First, cobalt powder (75 wt%) serving as the second metal used for stabilizing the shape change of tin at the time of adsorption and discharge of lithium, and tungsten powder (25 wt%) serving as the third metal that hardly reacts with an electrolytic solution and also hardly adsorbs and discharges lithium are selected, and these are heated in an inert gas atmosphere to be formed into an alloy (thereafter, may be pulverized and classified into alloy powder particles having a size of several tens µm), and these alloy powder particles (20 wt%) are further added to and mixed tin powder (80 wt%) so that an alloy is again formed by using an inert-gas atomizing method. The alloy having a particle size of about several tens µm to several hundreds µm, thus obtained, is finely pulverized by using a jet mill or the like, and then classified to produce a negative electrode active material particle in accordance with the present invention.

Here, in the case when the rate of a metal oxide contained in the negative electrode active material particle exceeds 1 wt%, the utilization factor of the initial negative electrode active material particle becomes 90% or less due to a synergetic effect with the other effects; therefore, the manufacturing process of the negative electrode active material particle, particularly, in a temperature rising state, is preferably carried out under an inert-gas atmosphere, until the negative electrode active material has been kneaded with a binder and the like to form at least a coating solution state (slurry state) .

When the negative electrode active material particle thus formed was observed under an electron microscope, tungsten, which had been deposited on, combined or fused with the particle interface and/or the outer surface of the negative electrode active material particle, was observed.

Moreover, in the case when the negative electrode, formed by applying the negative electrode active material particle thereto, was allowed to undergo an electrochemical reaction between it and a positive electrode that is the opposing electrode in an electrolytic solution, no SEI coat film to be caused by the reaction with the electrolytic solution was formed at each of the tungsten portions that were partially deposited on, combined or fused with on the surface of the negative electrode active material particle; consequently, since the electrical contact with the conductive material such as carbon filled inside the negative electrode is maintained, the capacity damping rate of the battery after a lapse of 30 cycles of charging and discharging processes in the lithium secondary coin battery can be improved to about 1/20.

The object of the third step is to further restrain the formation of the SEI coat film through the reaction between the negative electrode active material particle and the electrolytic solution, by further carrying out a surface treating process on the negative electrode active material particle of the present invention formed as described above, and consequently to further strengthen the electrical network formed inside the negative electrode to which the negative electrode active material particle has been applied, and this object is achieved by allowing the conductive material to be anchored, coated and/or coordinated onto the surface of the negative electrode active material particle.

The conductive material to be anchored, coated and/or coordinated onto the surface of the negative electrode active material particle in the present step corresponds to one kind or two kinds or more of conductive materials selected from conductive metals, metal carbides and carbon, and specific examples thereof include: (1) conductive metal corresponding to one kind or two or more kinds of metals selected from the group consisting of nickel, iron, copper, chromium, niobium, silver, tantalum, vanadium, molybdenum, tungsten and titanium, or alloys thereof; (2) one kind or two kinds or more of carbides selected from the group consisting of CoC, CrC, FeC, MoC, WC, TiC, TaC and ZrC; and/or (3) one kind or two kinds or more of carbons selected from the group consisting of low-temperature fired carbon, amorphous carbon, Ketchen Black, Acetylene Black, nanotube, nanohorn, fiber-shaped carbon and graphite (scale-shaped, spherical, artificial or natural one).

In particular, by allowing a carbide serving as the conductive material to be anchored, coated and/or coordinated onto the surface of the negative electrode active material particle through a mechanofusion method, a hybridizing method or the like, or by firing a carbide together with a polymer material so as to be anchored, coated and/or coordinated onto the surface of the negative electrode active material particle, or by directly carbonizing the surface of the negative electrode active material particle to form a carbide thereon, a firm electron conductive network is constructed on the surface of the negative electrode active material particle, with the result that in the case of the negative electrode active material particle that has been surface-treated by the conductive material, it is possible to reduce the specific resistance thereof to 0.01 Ω · cm to 1.0 Ω · cm, in comparison with the specific resistance in a range from 3 Ω **·** cm to 5 Ω **·** cm of the negative electrode active material particle that has not been surface-treated by the conductive material.

Upon anchoring, coating and/or coordinating the conductive metal onto the surface of the negative electrode active material particle, at least one method selected from the group consisting of a mechanofusion method, a hybridizing method, a plating method, a sputtering method, a vapor deposition method, a flame coating method, a spraying method, a coating method, an immersing method, an electrostatic method, a firing method, a sintering method, a sol-gel method, a vapor phase method and a planetary ball-mill method is preferably used. Moreover, this is preferably subjected to a heating treatment at a temperature of 100°C or more under an inert gas atmosphere or under vacuum so that a mutual diffusion layer is preferably formed on the contact interface with the negative electrode active material particle so as to enhance the joining strength between the conductive metal and the surface of the negative electrode active material particle.

Upon anchoring, coating and/or coordinating carbon onto the surface of the negative electrode active material particle, it may be anchored, coated and/or coordinated onto the surface of the negative electrode active material particle by using a binder; however, in order to obtain strong electrical contact with the negative electrode active material particle and anchoring strength onto the negative electrode active material particle, carbon is preferably joined, anchored or coated onto the surface of the negative electrode active material particle by applying a pressing force or an impact force through a mechanofusion method, a hybridizing method or the like, or an organic compound is alone fired or an organic compound to which the carbon has been added is fired so that the carbon may be more preferably anchored, coated and/or coordinated onto the surface of the negative electrode active material particle.

In the case when the rate at which the total weight of the negative electrode active material particle is occupied by metals contained in the second and thirdmetals and the conductive material becomes 5 wt% or less, the miniaturization of the negative electrode active material particle progresses due to distortion fatigue caused by a structural change following the volume expansion and contraction at the time of adsorption and discharge of lithium, with the result that the electrical contact tends to be lowered due to isolation of the particle. In contrast, the rate exceeding 80 wt% restrains the miniaturization due to the volume expansion and contraction of the negative electrode active material alloy particle at the time of adsorption and discharge of lithium so that the problem of lowering of the electrical contact due to isolation of the particle can be solved; however, a new problem arises in which the battery capacity prepared as the negative electrode active material particle becomes extremely small.

Therefore, in order to achieve the object of the present invention, the rate at which the negative electrode active material particle is occupied by metals contained in the second and third metals and the conductive material is preferably adjusted in a range from 5 wt% to 80 wt%, more preferably, from 10 wt% to 50 wt%.

Next, in order to manufacture a negative electrode in accordance with the present invention, following the above-mentioned manufacturing method for the negative electrode active material particle, a coating material which contains the negative electrode active material particle on which the conductive material is anchored, coated and/or coordinated, an additional conductive material such as carbon and graphite, and a coating solution prepared by viscosity-adjusting a binder, a dispersant and the like by the use of water and a solvent, is prepared.

Then, the coating material thus prepared is (1) directly coated onto a negative electrode collector by using a flame coating method, or (2) applied thereto by using a coating method so that the surface treatment is carried out, and after having been dried or subjected to a heating process, this is roll-pressed at a low pressure so that the concave portions on the surface of the negative electrode are smoothed to form a negative electrode having a predetermined thickness and an electrode density.

With respect to the negative electrode of the present invention manufactured in this manner, in the case when (1) the direct coating process is carried out by using the flame coating method, the negative electrode thus manufactured is impregnated with an electrolyte containing an ionic liquid having a moisture content of 10 ppm or less, and in the case when (2) the coating process is carried out by using the coating method, an ionic liquid simple substance or an electrolyte containing an ionic liquid is preliminarily contained in the coating solution, or this is forcefully contained in the coating solution by using a vacuum impregnating method; thus, an electrolyte layer containing the ionic liquid is thinly formed on the surface of the negative electrode manufactured.

As a result, when a solid-state electrolyte which uses a gel-state ionic liquid containing an ionic liquid having a mechanical strength is applied to the negative electrode of the present invention, the component of the solid-state electrolyte is compatibly dissolved with the ionic liquid inside the surface treated layer of the negative electrode constituted by the negative electrode active material particles on the interface on which the negative electrode and the solid-state electrolyte are made in contact with each other, so that the adhesion between the two components is improved. In contrast, in the case when the electrolytic solution is used, the surface of the negative electrode active material particle inside the negative electrode is covered with the ionic liquid to prevent an inert coat film from being formed thereon, it is possible to accelerate the formation of the electron conductive network.

Moreover, with respect to the kind of the ionic liquid to be suitably used at this time, in particular, an ammonium-based, pyridinium-based, or piperidinium-based onium salt is preferably used. Here, unless the moisture content of the ionic liquid is kept at 10 ppm or less, lithium is inactivated by moisture; therefore, attention should be paid to this point.

Moreover, when the adhesion between the negative electrode and the solid-state electrolyte is further enhanced, the ion conductivity is improved so that a high charging and discharging capacity can be obtained, and even in the case when charging and discharging processes are repeated, it is possible to further restrain a reduction in the contacting property with the solid-state electrolyte due to the volume change in the negative electrode active material, and consequently to provide a further superior charging and discharging cycle property.

Practical researches and developments on the surface treating method of the negative electrode active material particle onto the negative electrode collector by the use of a coating process or the like tend to be reduced because the negative electrode active material particle is miniaturized due to structural damages caused by adsorption and discharge of lithium in the negative electrode active material particle to cause an extreme reduction in the cycle property of the battery. However, in comparison with surface treating methods disclosed in the other Patents in which pillar-shaped silicon members having a thickness or a height of several µm are formed on the surface of a negative electrode collector whose surface is roughened by using a method such as an ion sputtering method, a PVD method, a CVD method or a plating method, the surface treating method of the present invention using a coating process and the like makes it possible to make the thickness of the surface treated layer further thicker, and consequently to provide an advantageous method for increasing the electrode capacity to enhance the capacity efficiency.

Furthermore, the surface treating method suitably used for forming a porous layer or a matrix network on a negative electrode collector by using the coating material containing the negative electrode active material particle of the present invention may include (1) the above-mentioned surface treating method such as a plating method, a sputtering method, a vapor deposition method, a flame coating method, a spraying method, an immersing method, an electrostatic method, a vapor phase method and a sintering method, and (2) a surface treating method including processes in which a coating solution in which a conductive material assistant such as carbon, and a binder are mixed with a negative electrode active material in a particle state is prepared and this is applied to the surface of the negative electrode collector to be dried thereon.

Furthermore, in an attempt to form a further stronger electron conductive network on the resulting negative electrode, it is effective to further form a porous layer or a matrix network that allows lithium ions to freely move and does not intervene with adsorption and discharge of lithium inside the negative electrode active material, by carrying out a surface treatment through a method such as a plating method, a sputtering method, a vapor phase method and a vapor deposition method by using metal such as nickel, copper, silver and iron.

As a result, the electrical connection among the negative electrode active material particles as well as between the negative electrode active material particles and the negative electrode collector is positively achieved by the third metal that is deposited on, combined or fused with the surface and/or the interface of the negative electrode active material particles or the conductive material that is anchored, coated and/or coordinated onto the surface of the particle, as well as by the conductive assistant that is mixed with the negative electrode active material particles and surface-treated thereon.

In the case when carbon such as Ketchen Black, Acetylene Black, nanotube and nanohorn is used as the conductive assistant to be mixed with the negative electrode active material particle of the present invention and surface-treated thereon, it is preferably contained in the coat layer, in particular, at a rate in a range from 1 wt% to 15 wt%, in weight conversion; thus, strong electrical connection can be obtained among the particles and the like, and in order to restrain a change in thickness of the negative electrode due to adsorption and discharge of lithium, it is preferably contained at a rate in a range from 6 wt% to 15 wt% so as to achieve the object.

With respect to the void rate in the coat layer formed on the negative electrode as described above, by adjusting the void rate in a range from 40% to 65%, in a state where the negative electrode active material particles have been applied to the surface and rear surface of the negative electrode collector and thermally dried thereon, the volume expansion due to adsorption of lithium ions in the negative electrode active material particle is absorbed by the inside of the coat layer so that it is possible to restrain an increase in the thickness of the negative electrode.

Therefore, the negative electrode active material particle of the present invention exerts great effects to restrain the shape change of a lithium secondary battery as a whole, and by coating the surface of the coat layer with one kind or two kinds or more of metals selected from the group consisting of nickel, silver, copper and iron, by using a method such as a plating method, a porous layer or a matrix network is formed thereon, thereby making it possible to reduce the electrode resistance.

As described above, the negative electrode active material particle of the present invention (1) restrains miniaturization of the particle due to adsorption and discharge of lithium in the negative electrode active material particle, and (2) prevents an inert coat film caused by a reaction with an electrolytic solution or the like from being generated to cover the entire surface of the negative electrode active material particle; thus, it becomes possible to form a firm electronic conductive circuit, and consequently to achieve the formation of an electrical connection network that is hardly influenced by the volume change upon adsorption and discharge of lithium.

Here, with respect to combinations between the negative electrode active material particle and the other metals and the like and ratios of individual components, as well as particle sizes of raw materials, the thickness, density and manufacturing conditions of the electrode, the surface state of the collector and the kinds of the electrolyte, not particularly limited by the embodiments, these can be appropriately selected in accordance with the application, capacity, shape and the like of a lithium secondary battery, within the scope of the technical idea of the present invention.

### BRIEF DESCRIPTIONS OF THE DRAWINGS

Fig. 1 is a cross-sectional view showing a coin cell using negative electrode active material particles in accordance with the present invention.
Fig. 2 is a cross-sectional view showing the negative electrode active material particle in accordance with the present invention.
Fig. 3 is a cross-sectional view showing the negative electrode active material particle in accordance with the present invention, in which the negative electrode active material particle of Fig. 2 is further subjected to a surface modifying treatment.
Fig. 4 is a cross-sectional view showing a negative electrode coated with the negative electrode active material particles in accordance with the present invention.
Fig. 5 is a SEM photograph showing negative electrode active material particles having an indefinite shape, in accordance with the present invention.
Fig. 6 is a SEM photograph showing negative electrode active material particles having a sponge-shaped network organization, in accordance with the present invention.
Fig. 7 is a SEM photograph showing negative electrode active material particles forming coagulation (aggregation), in accordance with the present invention.
Fig. 8 is a SEM photograph showing negative electrode active material particles forming coagulation (aggregation) with a distorted shape, in accordance with the present invention.

### BEST MODE FOR CARRYING OUT THE INVENTION

The following description will discuss a negative electrode to which the negative electrode active material particle of the present invention is applied and a lithium secondary battery to which the negative electrode is applied in detail by reference to Examples and Comparative Example.

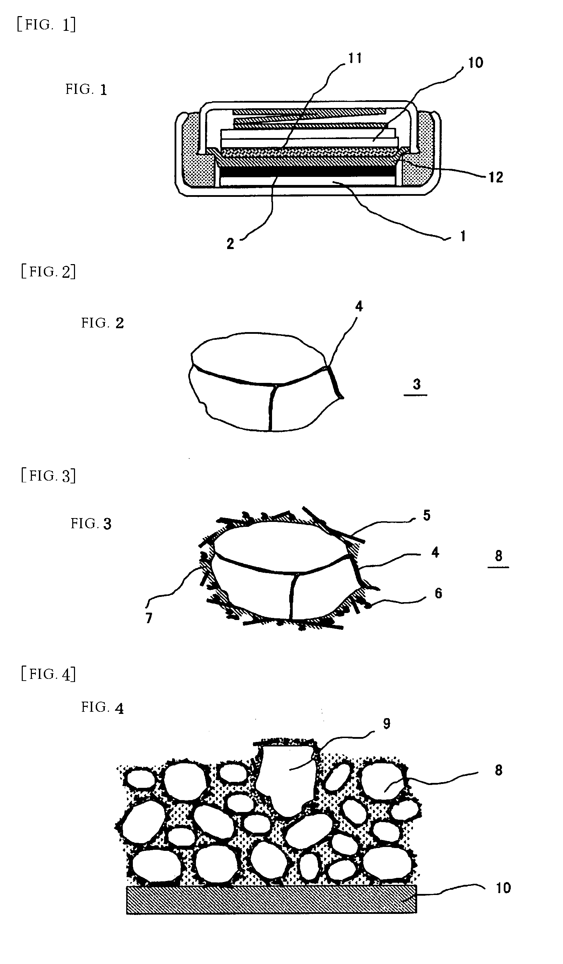

Fig. 1 shows a cross section of a coin cell 1 using the negative electrode active material particle of the present invention. In the coin cell 1, a negative electrode 11 coated with the negative electrode active material particles of the present invention and a positive electrode 2 are laminated on a copper foil 10 serving as a negative electrode collector, with a separator 12 interposed between them.

Fig. 2 shows a cross section of a negative electrode active material particle 3. A third metal 4 having a property of hardly reacting with an electrolytic solution and of hardly adsorbing and discharging lithium is deposited on, combined or fused with the surface and/or the interface of the negative electrode active material particle 3.

Fig. 3 shows a cross section of a negative electrode active material particle 8 that is obtained when the negative electrode active material particle 3 of the present invention is further subjected to a surface modifying treatment. The third metal 4 is deposited on, combined or fused with the surface and/or the interface of the negative electrode active material particle 8, and a VGCF conductive material 5, Acetylene Black 6 and a phenol resin carbon layer 7, which are conductive materials, are further anchored, coated and/or coordinated onto the surface of the negative electrode active material particle 8.

### Example 1

A coating solution serving as a positive electrode active material, formed by kneading lithium cobaltate, a conductive material and a binder with one another, was applied to an aluminum foil serving as a positive electrode collector with a thickness of 130µm, and dried thereon, and a positive electrode 2 having a thickness of 90µm was formed by a roll press, and punched out into a disc shape with a diameter of 16 mm.

Tin powder alloy particles formed by preliminarily adding antimony (0.09%), zinc (0.02%) and silicon (0.01%) to particles mainly composed of tin were used as a negative electrode active material serving as a first metal.

Next, cobalt (67 wt%) serving as a second metal and molybdenum (33 wt%) serving as a third metal were mixed at the respective rates so that Co-Mo alloy powder particles of about 100µm were produced by using a gas atomizing method.

Moreover, tin powder particles (75wt%) and the Co-Mo alloy powder particles (25 wt%) were mixed at the respective rates and dissolved so that Sn-Co/Mo alloy powder particles 3 having a particle size in a range from about 10µm to about 150µm were again produced by using a gas atomizing method.

The Sn-Co/Mo alloy powder particles 3 thus produced, which contained tin and cobalt alloyed with each other, had a structure in which molybdenum 4 having a property of hardly reacting with an electrolytic solution and of hardly adsorbing and discharging lithium was biasly deposited on, combined or fused with at least one portion of the particle interface and/or the outer surface of the Sn-Co alloy particle 3, with the remaining molybdenum 4 forming a mutual diffusion layer together with the Sn-Co alloy so as to combine the tin serving as the first metal and the cobalt serving as the second metal with each other.

Therefore, in the case when the Sn-Co/Mo alloy powder particles 3 were pulverized into fine powder particles having an average particle size of about 2µm by using a pulverizing device such as a jet mill, most of the alloy powder particles 3 were broken at the particle interfaces thereof, while those alloy powder particles 3 having a comparatively large average particle size (average particle diameter: about 15µm), remained without being sufficiently pulverized, had a number of particle interfaces with molybdenum 4 being deposited therein in a linear shape.

Moreover, after a solution formed by mixing 5% of phenol resin solution, VGCF 5 and Acetylene Black 6 had been applied to the Sn-Co/Mo alloy powder particles that had once been classified to an average particle size of 2µm by an atomizing process or a spin coating process, this was subjected to a heating process at about 830°C in an argon hydrogen gas atmosphere so as to carbonize the phenol resin on the outer surface of the alloy powder particle 3 so that a Sn-Co/Mo alloy powder particle 8 (see Fig. 3), which had a complex shape with VGCF 5, Acetylene Black 6 and the like being anchored, coated and/or coordinated thereon, was produced.

Next, to 85 wt% of Sn-Co/Mo alloy powder particles 8 prepared by pulverizing the above-mentioned Sn-Co/Mo alloy powder particles 8 by the use of a jet mill and classifying these particles so as to have an average particle size of 2µm and 5 wt% of Sn-Co/Mo alloy powder particles 9 prepared by pulverizing the same alloy powder particles by the use of a jet mill and classifying the particles so as to have an average particle size of 20µm were further added 5 wt% of Ketchen Black serving as a conductive assistant and 5 wt% of PVdF serving as a binder, and this was dispersed and kneaded by using a planetary mixer, and viscosity-adjusted by using NMP to produce a coating solution.

Lastly, after this coating solution had been applied onto the surface of a copper foil 10 serving as a negative electrode collector so as to have a thickness of about 60µm and dried thereon, this was then subjected to a heating roll pressing process under a linear pressure of about 150 kg/cm so that an electrode plate for a negative electrode 11, with protruding matters on the coating surface being smoothed, was manufactured. The thickness of the electrode plate for the negative electrode thus obtained was about 52µm.

Fig. 4 shows a partial cross section of the negative electrode 11 thus produced, which has been punched into a disc shape having a diameter of about 16.2 mm. The negative electrode 11 has a structure in which a coating material containing the negative electrode active material particles 8 and 9 of the present invention is applied to the surface of the copper foil 10 serving as a negative electrode collector and dried thereon to form a coat layer.

After this negative electrode 11, the above-mentioned positive electrode 2 and separator 12 had been vacuum-impregnated with an electrolytic solution of 1M of LiPF6 + EC/DMC to which an ionic liquid had been added, these were placed inside a coin cell container so that a battery was manufactured. Constant current charging and discharging cycle tests were carried out on the battery in a thermostat at 23°C for every 5 hours, and the results are shown in Table 3.

### Example 2

In Example 2, 70 wt% of tin powder particles serving as the first metal, 10 wt% of silicon powder particles used for improving voltage and 20 wt% of Co-Mo alloy powder particles made of an alloy of the second and third metals in the same manner as in Example 1 were mixed at the respective rates, and by using a gas atomizing method, Sn-Co-Si/Mo alloy powder particles 3 having a particle size in a range from about 20µm to about 110µm were produced. These alloy powder particles 3 were processed in the same method as in Example 1 to produce a coin cell, and charging and discharging cycle tests were carried out on the battery. The results are shown in Table 3.

### Example 3

In Example 3, the negative electrode active material particle in accordance with the present invention was produced by using silicon as a negative electrode active material particle that adsorbs and discharges lithium serving as the first metal.

More specifically, 80 wt% of nickel serving as the second metal and 20 wt% of tungsten serving as the third metal were mixed at the respective rates so that Ni-W alloy powder particles in a range of about 100µm to about 200µm were produced by using a gas atomizing method.

Next, silicon powder particles (65 wt%), the N-W alloy powder particles (30 wt%) and aluminum (5 wt%) serving as the first metal were mixed at the respective rates so that Si-Ni-Al/W alloy powder particles 3 of about 8µm to about 60µm were produced by using a gas atomizing method.

The alloy powder particles 3 thus produced were further pulverized and classified into particles having an average particle size of 2µm, and the surface of each particle was then nickel-plated. A nickel metal coat layer was formed on at least one portion of the outer surface of each of the resulting alloy powder particles 8, and this was further subjected to a heating process at a temperature of 650°C or more in an argon hydrogen gas atmosphere so as to diffuse nickel over the surface layer of each alloy powder particle so that Si-Ni-A/W alloy powder particles 8, each having a coat layer in which the surface of the alloy powder particle and the nickel-plated layer were firmly combined with each other, were produced.

Lastly, these alloy powder particles 3, a conductive assistant and a binder were kneaded at the same compounding ratio as that of Example 1, and this kneaded matter was applied onto the surface of a copper foil 10, and dried thereon, and after having been subjected to a light pressing process under a linear pressure of about 50 kg/cm, this was assembled into a coin cell. Table 3 shows the results of charging and discharging tests carried out on a battery manufactured.

### Example 4

In Example 4, 50 wt% of tin powder particles serving as the first metal, 30 wt% of silicon powder particles used for raising the average voltage and 20 wt% of cobalt serving as the second metal were mixed with one another, and formed into alloy powder by using a planetary ball mill. At this time, some of the powder particles formed alloy portions anchored onto the wall face of the planetary ball mill container; however, in the next process, the powder particles except for these portions were used. Here, the above-mentioned alloy powder may be produced by using a gas atomizing method or a water atomizing method instead of using the planetary ball mill.

Next, these fine powder particles of Sn-Co-Si alloy were immersed into a nickel plating bath heated to about 85°C, which served as the third metal, and subjected to a plating process for about 30 seconds, with ultrasonic waves being applied thereto, and the resulting particles were then washed and subjected to a vacuum-heating process to be dried so that fine powder particles 3 of Sn-Co-Si/Ni alloy were produced. Moreover, these particles were further subjected to a heating process at about 600°C for 10 minutes under vacuum (degree of vacuum with an inert gas being slightly injected thereto) in order to firmly combine the plated nickel and the alloy with each other; thus, a mutually diffused layer was formed.

Nickel particles serving as the third metal were scattered to be deposited on, combined or fused with the surface of each of the Sn-Co-Si alloy powder particles 3 thus produced in a dispersed manner, and it was confirmed that since these nickel particles were not easily come off the surface of the alloy particle, the particles were firmly combined therewith through mutual diffusion.

Next, these alloy powder particles 3, a conductive assistant and a binder were kneaded at the same compounding ratio as that of Example 1, and this kneaded matter was applied onto the surface of a copper foil 10 and dried thereon, and after having been subjected to a light pressing process under a linear pressure of about 50 kg/cm, this was assembled into a coin cell. Table 3 shows the results of charging and discharging tests carried out on a battery manufactured.

### Example 5

In Example 4, 50 wt% of tin powder particles serving as the first metal, 30 wt% of silicon powder particles used for raising the average voltage and 20 wt% of nickel serving as the second metal were mixed with one another, and formed into alloy powder by using a planetary ball mill. Here, some of the powder particles formed alloy portions anchored onto the wall face of the planetary ball mill container; however, in the next process, the powder particles except for these portions were used. Here, the above-mentioned alloy powder may be produced by using a gas atomizing method or a water atomizing method instead of using the planetary ball mill.

Next, these fine powder particles of Sn-Ni-Si alloy and nickel fine powder serving as the third metal were processed for about 45 minutes by a mechanofusion method so that negative electrode active material particles 3 in which Ni fine powder particles were combined with one portion of each Si-Ni-Si fine powder particle in a dotted state were produced. Moreover, these particles were further subjected to a heating process at about 600°C for 10 minutes under vacuum (degree of vacuum with an inert gas being slightly injected thereto) in order to firmly combine the nickel and the alloy with each other; thus, a mutual diffusion layer was formed.

Nickel particles serving as the third metal were scattered to be deposited on, combined or fused with the surface of each of the Sn-Ni-Si alloy powder particles thus produced in a dispersed manner, and it was confirmed that since these nickel particles were not easily come off the surface of the alloy particle, the particles were firmly combined therewith through mutual diffusion.

Next, these alloy powder particles 3, a conductive assistant and a binder were kneaded at the same compounding ratio as that of Example 1, and this kneaded matter was applied onto the surface of a copper foil 10 and dried thereon, and after having been subjected to a light pressing process under a linear pressure of about 50 kg/cm, this was assembled into a coin cell. Table 3 shows the results of charging and discharging tests carried out on a battery manufactured.

### Example 6

To tin that is a main component serving as the first metal and a negative electrode active material was preliminarily added 0.09% of phosphorous, and to this were added cobalt and bismuth (or may be indium) serving as the second metal, and mixed, and these were fused to form an alloy; then, the alloy was pulverized and classified by using a sieve device into alloy particles of about 30µm or less. Next, these particles were further finely pulverized, and classified by a classifier so that particles of 0.1µm to 5µm (average particle size: 1.1µm) were obtained.

When the tin alloy particles thus obtained were analyzed through X-ray spectroscopic analysis, peaks of Co₃Sn₂, CoSn, CoSn₂, Sn, Bi (or In) and the like were detected, and these were successively subjected to a heating process at about 500°C to 600°C in an inert gas (or vacuum) atmosphere so that tin alloy particles in which a peak corresponding to CoSn₂ crystal was remarkably detected as a main component of the alloy were obtained. Moreover, as a result of mapping, it was found that a cobalt component, a tin component and a bismuth (or indium) component were evenly dispersed in the alloy particle. Moreover, when these were further processed by a planetary ball mill for a short period of time, the tin alloy particles were pulverized to a level of 3µm in the maximum particle size.

In this manner, the alloy particles obtained after the fusing process corresponded to a mixed composition made from several kinds of alloy compositions; in contrast, when, after having been cooled, these were again subjected to a heating process within such a temperature range as not to fuse the particles with one other so that target particles mainly composed of CoSn₂ crystal were obtained.

Next, 91 wt% of negative electrode active material mixed particles prepared by mixing the above-mentioned tin alloy powder particles (80 wt%) and MCMB (20 wt%) (average particle size: 6µm or less) serving as a carbon material capable of adsorbing and discharging lithium at the respective rates, 5 wt% of a conductive material (for example, Acetylene Black) and 1 wt% of PVdF serving as a binder were mixed, and to this was further added 3 wt% of a solvent-based SBR to form a mixed material; thus, the mixed material was kneaded while being viscosity-adjusted by NMP so that a coating solution was formed.

This coating solution was applied onto the surface of a copper foil 10 serving as a negative electrode collector, and dried thereon, and this was then subjected to a heating roll pressing process so that a negative electrode of about 31µm was obtained. Next, by using LiNi_{X}Co_{Y}Al_{Z}O₂ (or LiNi_{X}Co_{Y}Mn_{Z}O₂) as a positive electrode active material, a positive electrode having a thickness of about 90µm was manufactured, and these were impregnated with 1M of an electrolytic solution of LiClO₄ + EC/DEC, with a porous separator membrane being interposed between the negative electrode and the positive electrode, so that an aluminum-laminated pack cell 45 mAh was manufactured.

This aluminum-laminated pack cell was placed in a thermostat at 23°C, and constant current charging and discharging cycle tests were carried out thereon for every 5 hours; consequently, a discharging capacity after 30 cycles was about 43.8 mAh, and that after 50 cycles was 43.7 mAh. Moreover, as shown in Table 3, the discharging capacity degradation rate after 30 cycles was 2.6%.

### Example 7

To tin that is a main component serving as the first metal and a negative electrode active material was preliminarily added 0.09% of phosphorous, and to this were added cobalt serving as the second metal, several % of indium and boron, and these were fused to form an alloy; then, the alloy, which had been cooled and again subjected to a heating process, was pulverized and classified into alloy particles of about 10µm or less. As a result of X-ray spectroscopic analysis, it was found that the alloy particles were mainly composed of alloy of CoSn₂ crystal. At this time, the main components of the alloy particles were composed of approximately 80 wt% of tin and 20 wt% of cobalt in the weight ratios.

Next, an ingot of metal lithium was fused in a stainless crucible in an argon gas atmosphere. By allowing this metal lithium in its fused state and the tin alloy particles to react with each other, lithium alloy particles that were alloyed through mutual diffusion were produced. Moreover, the lithium alloy particles were subjected to a lithium component eliminating process in a lithium hydroxide solution.

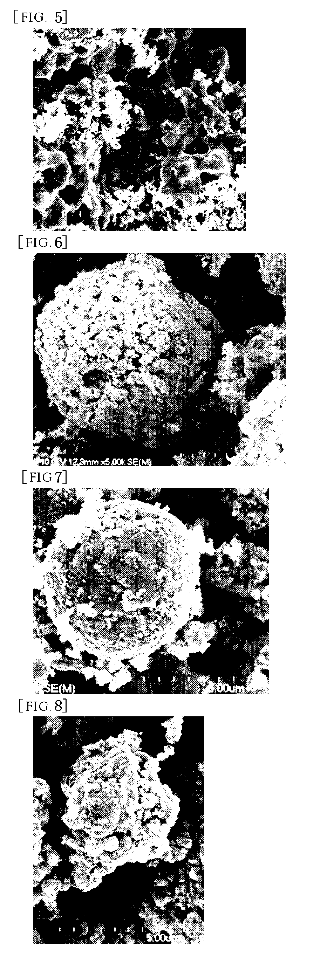

The powder thus treated was vacuum-dried and SEM-observed so that it was found that there were particles having an indefinite shape (see Fig. 5), that is, a shape (its outside appearance was such as pumice, coral or the like, and its shape is smooth shapes on the surfaces of individual protrusions and the like) in which infinite fine discontinuous pores and fine continuous pores were formed, fine particles of a sponge-shaped network organization (see Fig. 6), that is, a shape with cracks having infinite fine pores and voids reaching the surface and the inside thereof, and coagulated particles (or aggregated particles, see Figs. 7 and 8) in which the above-mentioned particles were aggregated and combined with one another.

It is presumed that the tin alloy powder and lithium were mutually diffused and combined with each other to cause a change in the crystal structure of the alloy particles so that these structures were generated, and consequently, it becomes possible to form negative electrode active material particles having a shape that exerts a state in which structural distortions inside the particle, produced after repetitive charging and discharging processes, are opened, from the initial state of the production.

The resulting particles have particles as shown in Figs. 5, 6, 7 and 8, and fine particles derived from these particles that have been pulverized in a mixed state, and when further ground (by using, for example, an agate mortar, a jet mill, a ball mill, or a beads mill), those large particles were easily formed into fine particles having a particle size in a level of 0.05µm to 1µm (0.3µm in the average particle size). Here, when fine particles are formed, the aggregation progresses and sometimes causes a larger measured value in the particle size distribution.

Next, the above-mentioned alloy particles were kneaded together with a conductive material (such as Acetylene Black) and a binder, and the resulting kneaded matter was applied to the surface of a copper foil so that a negative electrode was produced (or a negative electrode thus produced may be impregnated with an ionic conductive electrolytic solution containing an ammonium-salt-based ionic liquid), and a metal lithium foil was formed as the opposing electrode, and impregnated with 1M of an electrolytic solution of LiClO₄+EC/DEC so that a 16 φcoin cell was manufactured. After this coil cell had been subjected to charging and discharging tests of 30 cycles with 0.2C and 100% of DOD, the resulting coil cell was disassembled, and the negative electrode was washed so that the surface of the resulting negative electrode was observed for negative electrode active material particles.

In this case, a state in which the particles were further miniaturized in comparison with the state prior to the tests was hardly observed, and it was found that although fine traces of craters caused by coming-off particles were simply formed, a shape capable of absorbing a structural change was maintained in the particles as a whole.

That is, since the discharging capacity degradation rate after 30 cycles was set to about 1% that was a very low level relative to the initial value, it was confirmed that the particles in a state in which, by preliminarily allowing to adsorb lithium, the structure inside the particle had been changed were less vulnerable to a structural change in the alloy particles even in the case of again adsorbing and discharging lithium after the formation of the electrode, so that defects in the electrical network due to the miniaturization and coming off of the particles would hardly occur.

Moreover, in the case when instead of those particles as described above in which after the adsorption of lithium, the lithium has been eliminated, particles with lithium adsorbed therein, as they are, are used, the particles need to be handled in a sufficiently-controlled atmosphere, that is, in particular, in a state where moisture is sufficiently controlled.

### Comparative Example

In this Comparative Example, the same positive electrode structure, electrolytic solution composition, etc. as those of Examples 1 to 5 were used, except that only the material of the negative electrode was replaced by Sn-Co alloy powder particles obtained by alloying only tin serving as the first metal and cobalt serving as the second metal and subjecting the alloy to a pulverizing process, so that experiments were carried out.

More specifically, 80 wt% of tin and 20 wt% of cobalt, as they were, were fused in an electric furnace, and the resulting alloy was ground by a stone mortar into particles of about 100µm so that Sn-Co alloy powder particles were produced, and these were pulverized by using a jet mill or the like and classified under the same conditions as those of Examples 1 to 5; thereafter, to these were added a conductive assistant and a binder to provide a coating solution, and by applying this coating solution onto the surface of a copper foil 10 to be dried thereon, a negative electrode 11 of this Comparative Example was completed. Lastly, the negative electrode was assembled into a coin cell in the same method as that of Examples 1 to 5, and charging and discharging cycle tests for the battery were carried out thereon. Table 3 shows the results of the tests.

**[Table 3]**

| Kind | Discharging capacity degradation rate of battery after a lapse of 30 cycles |
|---|---|
| Example 1 | 3.4% |
| Example 2 | 2.5% |
| Example 3 | 2.6% |
| Example 4 | 2.4% |
| Example 5 | 2.5% |
| Example 6 | 2.6% |
| Example 7 | 1.0% |
| Comparative Example | 67.3% |

Table 3 indicates that, even after a lapse of charging and discharging cycles, the rate of reduction in the battery capacity of the lithium secondary battery of the present invention is maintained in a low level of 1/20 to 1/67, in comparison with that of the Comparative Example corresponding to the conventional battery.

The reason for this is presumably because the negative electrode of the present invention uses negative electrode active material particles mainly composed of CoSn₂ that contains tin serving as the first metal and cobalt serving as the second metal as described earlier so that the miniaturization of the particles due to charging and discharging processes is restrained, with the particles being preliminarily allowed to have lithium adsorbing past history.

Moreover, the negative electrode active material particles of the present invention have a structure in which the third metal having a property of hardly reacting with an electrolytic solution and of hardly adsorbing and discharging lithium is deposited on, combined or fused with the surface and/or the particle interface thereof; therefore, upon coating the surface of the negative electrode with these particles, a strong surface electron conductive network is formed among the respective particles as well as between the particles and the negative electrode collector, in the negative electrode coat layer, so that the above-mentioned effects are obtained.

In the case when the conventional negative electrode active material particles as shown in the Comparative Example are used, upon forming the electrode by the use of a coating process or the like, the formation of an inert coat film on the surface of the negative electrode active material particle and disconnections of the electron conductive circuits occur progressively as the charging and discharging cycles continue, and from a certain point of time, the capacity of the battery is extremely lowered because these phenomena progress at an increasing tempo.

Moreover, in the case when all the first metal, second metal and third metal are allowed to have compatibility and completely alloyed as shown in the Comparative Example, the effects as shown by the present invention are no longer exerted, and only the effects as seen in the conventional References are obtained, with the result that the discharging capacity after a lapse of 50 cycles is lowered to about 5. 6% (charging capacity degradation rate: 94.4%) of the initial capacity.

In contrast, in the case when the negative electrode active material particle in accordance with the present invention is applied to the negative electrode, by allowing the third metal to be deposited on, combined or fused with at least one portion of the particle interface and/or the surface of the negative electrode active material particle, an electron conductive circuit that is hardly influenced by an electrochemical reaction in the negative electrode is formed, and by also allowing the first metal serving as a negative electrode active material to contain the secondmetal, the combination between the first metal and the third metal element on the alloy particle surface can be strengthened by its compatibility while the miniaturization of the negative electrode active material is restrained.

Moreover, it becomes possible to strengthen the electrical connection among the negative electrode active material particles as well as between the negative electrode active material particles and the negative electrode collector through processes such as the surface modifying process on the negative electrode active material particle by the use of other conductive metal, carbide and carbon material that serve as conductive materials, the formation of the interface joining layer by a heating treatment, the coating process of the negative electrode surface with a porous metal, the injection of an ionic liquid into the negative electrode coat layer and the adjustment of the void rate.

As a result, in accordance with the present invention, it becomes possible to provide a negative electrode for lithium secondary batteries, which, even upon occurrence of expansion or contraction in the negative electrode active material particle due to a charging or discharging process of the battery, can maintain sufficient mobility of electrons at the time of a charging or discharging process, without any damage in the electrical connection network in the negative electrode.

Moreover, in the case when a negative electrode active material particle mainly composed of CoSn₂, which selects tin as the first metal and cobalt as the second metal, is applied to the negative electrode, since the homogeneity of the alloy composition in the alloy particles is improved, it becomes possible to restrain the miniaturization and isolation of the particle due to adsorption or discharge of lithium at the time of a charging or discharging process, and consequently to remarkably improve the cycle property of the negative electrode.

Additionally, since fine powder particles of aluminum, magnesium or iron and alloys thereof are highly active materials, these materials are preferably handled in an inert gas atmosphere. In particular, when handled in the air, these metals might cause an abrupt oxidizing reaction to catch fire, the amount of use needs to be reduced or the compounding ratio thereof needs to be adjusted.

Moreover, when fine powder particles, which are oxidized, although not to such an extent as to catch fire, as they are, are applied to a battery, lithium is brought into a passive state due to oxidization to cause a reduction in the battery capacity; therefore, special attention should be paid to this point. For example, when these fine powder particles are handled in the air, the battery capacity tends to be reduced by about 25% in comparison with those handled in an inert gas atmosphere.

## Claims

1. A negative electrode active material particle for lithium secondary batteries, which electrochemically adsorbs and discharges lithium, comprising:
a first metal mainly having a property of adsorbing and discharging lithium; and
a second metal having a property of stabilizing the shape change of the first metal upon adsorption and discharge of lithium,
wherein an alloy composition composed of the first metal and the second metal forms a main component thereof.

2. The negative electrode active material particle for lithium secondary batteries according to claim 1, wherein the first metal contains one kind or two or more kinds of metals selected from the group consisting of silicon, tin and aluminum.

3. The negative electrode active material particle for lithium secondary batteries according to claim 2, wherein the first metal further contains one kind or two or more kinds of metals selected from the group consisting of iron, aluminum, chromium, magnesium, manganese, antimony, lead, zinc and silicon.

4. The negative electrode active material particle for lithium secondary batteries according to claim 1, wherein the second metal contains one kind or two or more kinds of metals selected from the group consisting of iron, cobalt, copper, nickel, chromium, magnesium, lead, zinc, silver, germanium, manganese, titanium, vanadium, bismuth, indium and antimony.

5. The negative electrode active material particle for lithium secondary batteries according to claim 1, wherein the first metal contains tin and the second metal contains cobalt in the negative electrode active material particle, with the main composition thereof being CoSn₂.

6. A negative electrode active material particle for lithium secondary batteries, which electrochemically adsorbs and discharges lithium, comprising:
a first metal having a property of adsorbing and discharging lithium;
a second metal having a property of stabilizing the shape change of the first metal upon adsorption and discharge of lithium; and
a third metal that hardly reacts with an electrolytic solution and also hardly adsorbs and discharges lithium,
wherein the third metal is deposited on, combined or fused with at least one portion of a particle interface and/or an outer surface of the negative electrode active material particle.

7. The negative electrode active material particle for lithium secondary batteries according to claim 6, wherein the first metal contains one kind or two or more kinds of metals selected from the group consisting of silicon, tin and aluminum.

8. The negative electrode active material particle for lithium secondary batteries according to claim 7, wherein the first metal further contains one kind or two or more kinds of metals selected from the group consisting of iron, aluminum, chromium, magnesium, manganese, antimony, lead, zinc and silicon.

9. The negative electrode active material particle for lithium secondary batteries according to claim 6, wherein the second metal contains one kind or two or more kinds of metals selected from the group consisting of iron, cobalt, copper, nickel, chromium, magnesium, lead, zinc, silver, germanium, manganese, titanium, vanadium, bismuth, indium and antimony.

10. The negative electrode active material particle for lithium secondary batteries according to claim 6, wherein the third metal contains one kind or two or more kinds of metals selected from the group consisting of nickel, silver, copper and iron, or an alloy thereof.

11. The negative electrode active material particle for lithium secondary batteries according to claim 10, wherein the third metal further contains a metal having a property of being hardly alloyed with the first metal.

12. The negative electrode active material particle for lithium secondary batteries according to claim 11, wherein the metal having a property of being hardly alloyed with the first metal contains one kind or two or more kinds of metals selected from the group consisting of molybdenum, tungsten, tantalum, thallium, chromium, tellurium, beryllium and calcium, or an alloy thereof.

13. The negative electrode active material particle for lithium secondary batteries according to claim 6, wherein 1 wt% or more of the third metal is contained in the entire negative electrode active material particle.

14. The negative electrode active material particle for lithium secondary batteries according to claim 6, wherein 5 wt% to 80 wt% of the third metal is contained in the entire negative electrode active material particle.

15. The negative electrode active material particle for lithium secondary batteries according to claim 6, wherein 5 wt% or more of the second and third metals are contained in the total amount in the entire negative electrode active material particle.

16. The negative electrode active material particle for lithium secondary batteries according to claim 6, wherein the first metal contains tin and the second metal contains cobalt in the negative electrode active material particle, with the main composition thereof being CoSn₂.

17. The negative electrode active material particle for lithium secondary batteries according to claim 1 or 6, wherein the negative electrode active material particle has an average particle size of 20µm or less.

18. The negative electrode active material particle for lithium secondary batteries according to claim 1 or 6, wherein the negative electrode active material particle has an average particle size of 2µm or less, with particles accounting for 90% or more in the particle size distribution thereof being in a range of 0.01 to 10µm.

19. The negative electrode active material particle for lithium secondary batteries according to claim 1 or 6, wherein at least one compound selected from the group consisting of a zirconium oxide, a titanium oxide, a lithium titanate, a sulfide, a phosphite and a nitride is combined with at least one portion of the outer surface of the negative electrode active material particle.

20. The negative electrode active material particle for lithium secondary batteries according to claim 1 or 6, wherein the negative electrode active material particles are mixed with carbon serving as a negative electrode active material at a weight ratio of 30 wt% or more based on the mixture with the carbon.

21. The negative electrode active material particle for lithium secondary batteries according to claim 1 or 6, wherein the negative electrode active material particle forms a particle having a sponge-shaped network organization with continuous and/or discontinuous fine pores and/or a coagulated particle composed of the particles that are aggregated and combined with one another.

22. The negative electrode active material particle for lithium secondary batteries according to claim 1 or 6, wherein one kind or two or more kinds of conductive materials selected from the group consisting of a conductive metal, a metal carbide and carbon are anchored, coated and/or coordinated onto the surface of the negative electrode active material particle.

23. The negative electrode active material particle for lithium secondary batteries according to claim 22, wherein the conductive metal is a metal having a property of hardly reacting with an electrolytic solution and also hardly absorbing and discharging lithium electrochemically.

24. The negative electrode active material particle for lithium secondary batteries according to claim 23, wherein the conductive metal contains one kind or two or more kinds of metals selected from the group consisting of nickel, iron, copper, chromium, niobium, silver, tantalum, vanadium, molybdenum, tungsten and titanium, or an alloy thereof.

25. The negative electrode active material particle for lithium secondary batteries according to claim 22, wherein the carbide contains one kind or two or more kinds of carbides selected from the group consisting of CoC, CrC, FeC, MoC, WC, TiC, TaC and ZrC.

26. The negative electrode active material particle for lithium secondary batteries according to claim 22, wherein the carbide contains one kind or two or more kinds of carbons selected from the group consisting of low-temperature-fired carbon, amorphous carbon, Ketchen Black, Acetylene Black, nanotube, nanohorn, fiber-state carbon and graphite.

27. A negative electrode for lithium secondary batteries, wherein a coat layer is formed on the surface of a negative electrode collector by carrying out a surface treatment by using a coating material containing the negative electrode active material for lithium secondary batteries disclosed in claim 1 or 6.

28. The negative electrode for lithium secondary batteries according to claim 27, wherein the coat layer forms a porous layer or a matrix network.

29. The negative electrodeforlithiumsecondary batteries according to claim 27, wherein the coat layer has a void rate in a range from 40% to 65%.

30. The negative electrodeforlithiumsecondary batteries according to claim 27, wherein the coat layer further contains a conductive assistant selected from the group consisting of Ketchen Black, Acetylene Black, nanotube and nanohorn, in a range from 1 wt% to 15 wt% in weight conversion in the coat layer.

31. The negative electrodeforlithiumsecondary batteries according to claim 27, wherein, on the surface of the coat layer, a porous layer or a matrix network, made from one kind or two or more kinds or metals selected from the group consisting of nickel, silver, copper and iron, is formed.

32. The negative electrodeforlithiumsecondary batteries according to claim 27, wherein the negative electrode contains an ionic liquid inside thereof.

33. A method for manufacturing a negative electrode active material particle for lithium secondary batteries, which electrochemically adsorbs and discharges lithium, comprising:
a first step of preparing a first metal having a property of adsorbing and discharging lithium, a second metal having a property of stabilizing the shape change of the first metal and a third metal that hardly reacts with an electrolytic solution and also hardly adsorbs and discharges lithium;
a second step of alloying the second metal and the third metal with the first metal so that a negative electrode active material particle in which the third metal is deposited on, combined or fused with at least one portion of a particle interface and/or an outer surface of the negative electrode active material particle is formed; and
a third step of allowing one kind or two kinds or more of conductive materials selected from the group consisting of a conductive metal, a metal carbide and carbon to be anchored, coated and/or coordinated onto at least one portion of the surface of the negative electrode active material particle.

34. The method for manufacturing a negative electrode active material particle for lithium secondary batteries according to claim 33, wherein the second step further comprises a step of, after the second and third metals have been preliminarily alloyed with each other, alloying the resulting alloy with the first metal.

35. The method for manufacturing a negative electrode active material particle for lithium secondary batteries according to claim 33, wherein the second step further comprises a step of simultaneously alloying the first, second and third metals with one another.

36. The method for manufacturing a negative electrode active material particle for lithium secondary batteries according to claim 33, wherein the second step carries out the alloying process by using at least one method selected from the group consisting of a mechanical alloying method, a mechanical gliding method, a fusing method, a gas-atomizing method, a water-atomizing method, a mechanofusion method, a hybridizing method, a plating method, a sputtering method, a vapor deposition method, a vapor phase method, a liquid-quick-cooling method and a gas-quickly-cooling method so that the depositing, combining or fusing process is executed.

37. The method for manufacturing a negative electrode active material particle for lithium secondary batteries according to claim 33, wherein the second step further comprises a step of pulverizing the alloyed particles to form fine particles.

38. The method for manufacturing a negative electrode active material particle for lithium secondary batteries according to claim 33, wherein the second step further comprises a step of, after the first, second and third metals have been alloyed, subjecting the resulting alloy to a heating treatment in an inert gas atmosphere or under vacuum, at a temperature of 100°C or more.

39. The method for manufacturing a negative electrode active material particle for lithium secondary batteries according to claim 33, wherein the first metal contains one kind or two or more kinds of metals selected from the group consisting of silicon, tin and aluminum.

40. The method for manufacturing a negative electrode active material particle for lithium secondary batteries according to claim 39, wherein the first metal further contains one kind or two or more kinds of metals selected from the group consisting of iron, chromium, magnesium, manganese, antimony, lead and zinc.

41. The method for manufacturing a negative electrode active material particle for lithium secondary batteries according to claim 39, wherein the second metal contains one kind or two or more kinds of metals selected from the group consisting of iron, cobalt, copper, nickel, chromium, magnesium, lead, zinc, silver, germanium, manganese, titanium, vanadium, bismuth, indium and antimony.

42. The method for manufacturing a negative electrode active material particle for lithium secondary batteries according to claim 33, wherein the third metal contains one kind or two or more kinds of metals selected from the group consisting of molybdenum, tungsten, tantalum, thallium, chromium, tellurium, beryllium, calcium, nickel, silver, copper and iron, or an alloy thereof.

43. The method for manufacturing a negative electrode active material particle for lithium secondary batteries according to claim 33, wherein the conductive metal contains a metal having a property of hardly reacting with an electrolytic solution and also hardly absorbing and discharging lithium electrochemically.

44. The method for manufacturing a negative electrode active material particle for lithium secondary batteries according to claim 43, wherein the conductive metal contains one kind or two or more kinds of metals selected from the group consisting of nickel, iron, copper, chromium, niobium, silver, tantalum, vanadium, molybdenum, tungsten and titanium.

45. The method for manufacturing a negative electrode active material particle for lithium secondary batteries according to claim 44, wherein the conductive metal is anchored, coated and/or coordinated onto the surface of the negative electrode active material particle by using at least one method selected from the group consisting of a mechanofusion method, a hybridizing method, a plating method, a sputtering method, a vapor deposition method, a flame coating method, a spraying method, a coating method, an immersing method, an electrostatic method, a firing method, a sintering method, a sol-gel method, a vapor phase method, a planetary ball-mill method, a microwave method and a plasma irradiation method.

46. The method for manufacturing a negative electrode active material particle for lithium secondary batteries according to claim 45, wherein the microwave method or the plasma irradiation method is carried out by directly sputtering the surface of the negative electrode active material particle through irradiation in a gas flow of an aromatic-based solvent (benzene, toluene, zylene = BTX).

47. The method for manufacturing a negative electrode active material particle for lithium secondary batteries according to claim 33, wherein after having been anchored, coated and/or coordinated onto the surface of the negative electrode active material particle, the conductive metal is subjected to a heating treatment in an inert gas atmosphere or under vacuum, at a temperature of 100°C or more.

48. The method for manufacturing a negative electrode active material particle for lithium secondary batteries according to claim 33, wherein the carbide contains one kind or two or more kinds of carbides selected from the group consisting of CoC, CrC, FeC, MoC, WC, TiC, TaC and ZrC.

49. The method for manufacturing a negative electrode active material particle for lithium secondary batteries according to claim 33, wherein the carbide contains one kind or two or more kinds of carbons selected from the group consisting of low-temperature-fired carbon, amorphous carbon, Ketchen Black, Acetylene Black, nanotube, nanohorn, fiber-state carbon and graphite.

50. The method for manufacturing a negative electrode active material particle for lithium secondary batteries according to claim 49, wherein the carbon is joined, anchored or coated on the surface of the negative electrode active material particle by applying a pressing force or an impact force through a mechanofusion method, a hybridizing method or the like, or an organic compound is alone fired or an organic compound to which the carbon has been added is fired, so that the carbon is anchored, coated and/or coordinated onto the surface of the negative electrode active material particle.

51. The method for manufacturing a negative electrode active material particle for lithium secondary batteries according to claim 49, wherein the carbon is anchored, coated and/or coordinated onto the surface of the negative electrode active material particle by using a binder.

52. The method for manufacturing a negative electrode active material particle for lithium secondary batteries according to claim 51, wherein the binder contains PVdF or SBR.

53. A method for manufacturing a negative electrode for lithium secondary batteries comprising the steps of:
after the negative electrode active material particle has been produced by the method for manufacturing a negative electrode active material particle disclosed in claim 33, preparing a coating material containing the negative electrode active material particle, a conductive assistant and a binder; and
carrying out a surface treatment on the negative electrode collector by using the coating material so that a coat layer is formed thereon.

54. The method for manufacturing a negative electrode for lithium secondary batteries according to claim 53, wherein the coating material is applied to the surface of the negative electrode collector by using at least one method selected from the group consisting of a plating method, a sputtering method, a vapor deposition method, a flame coating method, a spraying method, a coating method, an immersing method, a vapor phase method and an electrostatic method, so that the coat layer is formed.

55. The method for manufacturing a negative electrode for lithium secondary batteries according to claim 53, further comprising the step of:
after the negative electrode has been formed, carrying out a surface treatment so that a porous layer or a matrix network is formed on the surface of the negative electrode by one kind or two or more kinds of metals selected from the group consisting of nickel, copper, silver and iron.

56. The method for manufacturing a negative electrode for lithium secondary batteries according to claim 55, wherein the porous layer or the matrix network is formed by using at least one method selected from the group consisting of a plating method, a sputtering method, a vapor phase method and a vapor deposition method.

57. The method for manufacturing a negative electrode for lithium secondary batteries according to claim 53, further comprising the step of injecting an ionic liquid into the negative electrode.
